# EUROPEAN PATENT SPECIFICATION

(11) **EP 2 438 315 B1**
(45) Date of publication and mention of the grant of the patent: **17.08.2016**
(21) Application number: 10722010.5
(22) Date of filing: 28.05.2010
(51) Int. Cl.: F16C 7/02

(54) **CONNECTING ROD LUBRICATION RECESS**
SCHMIERVERTIEFUNG EINER PLEUELSTANGE
CAVITÉ DE GRAISSAGE DE BIELLE

(30) Priority: 02.06.2009 US 476337
(43) Date of publication of application: 11.04.2012
(73) Proprietor: MAHLE International GmbH, 70376 Stuttgart (DE)
(72) Inventor: LAPP, Michael, T., Bloomfield, MI 48301 (US); DINU, Dan, H., Windsor, Ontario N962P2 (CA); KRAUSE, Roger, Howell, MI 48843 (US)
(74) Representative: BRP Renaud & Partner mbB Rechtsanwälte Patentanwälte Steuerberater
(86) International application number: PCT/EP2010/003262
(87) International publication number: WO 2010/139431

(56) References cited:
- EP-A2- 0 095 052
- FR-A1- 2 872 872

## Description

### BACKGROUND

The traditional internal combustion engine relies on connecting rods for transmitting combustion power from a piston main body to a crankshaft of the engine, thereby converting the linear motion of the piston main body to rotational motion at the crankshaft. Combustion power is generated from the intermittent ignition of gasoline that is injected into the combustion chamber, which creates extreme pressures that are applied to the piston and connecting rod. In particular, the interface between the piston pin bore of the connecting rod and the piston pin experiences continuous radial loads during operation, where only a limited amount of a lubricant may be available for lubricating the interface. In an effort to enhance lubrication at the interface of the piston pin and the connecting rod bore, at least one lubrication recess may be provided along an inner surface of the piston pin bore. EP 0095052 A2 discloses a piston assembly including a piston for an internal combustion engine and a connecting rod including a piston pin end and a piston pin bore located therein and configured for accommodating a piston pin. The piston pin bore provides longitudinal grooves for channeling lubricating oil existing within the connecting rod. FR 2872872 A1 discloses a connecting rod including cavities in the outer surfaces configured for guiding stresses experienced by the connecting rod during operation.

Typically, the lubrication recess is created by machining an indentation into an inner surface of the piston pin bore of the connecting rod. The machining process may be a separate manufacturing operation that occurs after the connecting rod piston pin bore has been created through a material forming operation, such as, for example, forging. Machining operations may add to the expense and the complexity of manufacturing the connecting rod.

Accordingly, there is a need in the art for a connecting rod including a lubrication recess that is relatively cost-effective and simple to manufacture.

### SUMMARY OF THE INVENTION

This object will be achieved by a method comprising the following steps: providing a connecting rod blank, where the connecting rod blank includes a crankshaft end and a piston pin end; and forming a crankshaft pin recess in the crankshaft end of the connecting rod blank, a piston pin recess in the piston pin end, and at least one lubrication recess in the piston pin end of the connecting rod blank; and wherein the lubrication recess and the piston pin recess are both formed concurrently.

### BRIEF DESCRIPTION OF THE DRAWINGS

While the claims are not limited to the illustrated embodiments, an appreciation of various aspects is best gained through a discussion of various examples thereof. Referring now to the drawings, illustrative embodiments are shown in detail. Although the drawings represent the embodiments, the drawings are not necessarily to scale and certain features may be exaggerated to better illustrate and explain an innovative aspect of an embodiment. Further, the embodiments described herein are not intended to be exhaustive or otherwise limiting or restricting to the precise form and configuration shown in the drawings and disclosed in the following detailed description. Exemplary embodiments of the present invention are described in detail by referring to the drawings as follows.
FIG. 1A is an elevated perspective view of an exemplary connecting rod;
FIG. 1B is a side view of the connecting rod shown in FIG. 1A assembled with a piston main body and a piston pin;
FIG 1C is an enlarged elevational perspective view of a piston pin end of the connecting rod;
FIG. 1D is magnified view of a lubrication recess of the piston pin end of the connecting rod;
FIG. 2A is a side view of an exemplary connecting rod blank;
FIG. 2B is a side view of the connecting rod blank of FIG. 2A after an initial forming operation;
FIG. 2C is a side view of the formed connecting rod blank of FIG. 2B after a subsequent forming operation;
FIG. 2D is a side view of the formed connecting rod blank of FIG. 2C after a subsequent forming operation to produce a connecting rod having a material flash;
FIG. 2E is an enlarged perspective view of the piston pin end of the connecting rod in FIG. 2D;
FIG. 2F is an enlarged perspective view of an alternative illustration of the piston pin end of the connecting rod in FIG. 2D;
FIG. 2G is a side view of a the formed connecting rod of FIG. 2D with the material flash removed from the connecting rod; and
FIG. 3 is a process flow diagram of an exemplary connecting rod forming process.

### DETAILED DESCRIPTION

Reference in the specification to "an exemplary illustration", an "example" or similar language means that a particular feature, structure, or characteristic described in connection with the exemplary approach is included in at least one illustration. The appearances of the phrase "in an illustration" or similar type language in various places in the specification are not necessarily all referring to the same illustration or example.

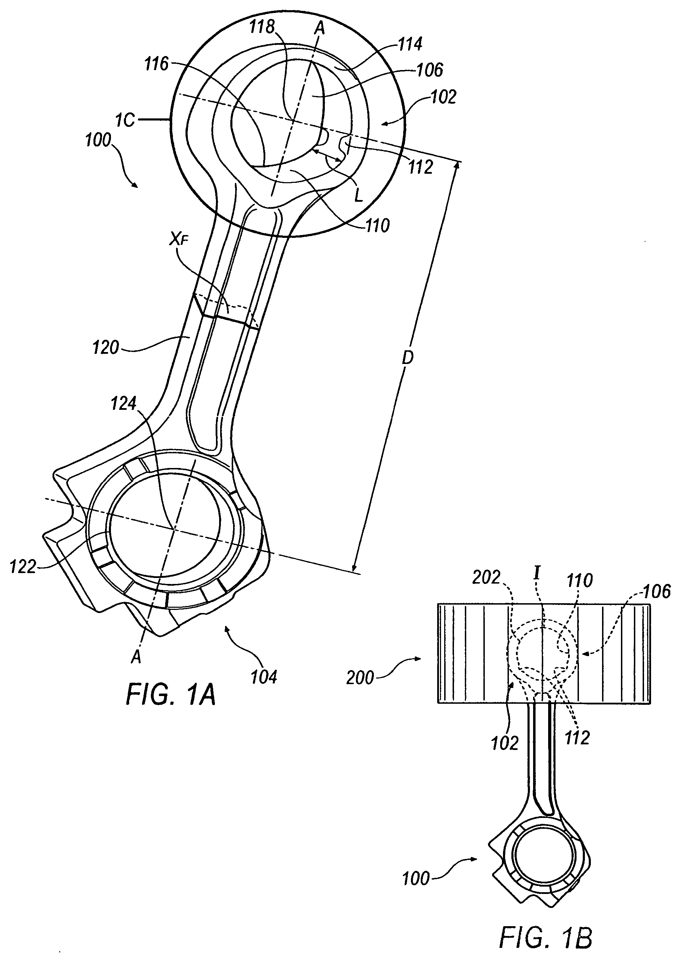

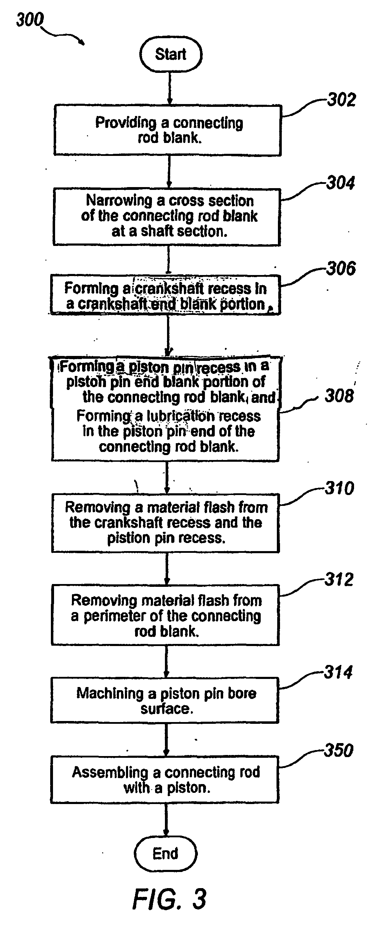

FIG. 1A illustrates an exemplary connecting rod 100. The connecting rod 100 includes a piston pin or small end 102 and a crankshaft or large end 104. The piston pin end 102 includes a piston pin bore 106 that defines a piston pin bore surface 110. The piston pin bore surface 110 includes at least one lubrication recess 112 located at the piston pin bore surface 110. The piston pin bore surface 110 includes a longitudinal surface L that extends between a front face 114 and a rear face 116 of the piston pin end 102. The lubrication recess 112 extends through only a portion of the longitudinal surface L of the piston pin bore surface 110. A method of making the connecting rod 100 is also disclosed at least in FIG. 3, where the lubrication recess 112 and the piston pin end recess 106 are defined concurrently in forming step 308 that creates the lubrication recess 112 and the piston pin end recess 106.

Referring back to FIG. 1A, the connecting rod 100 includes a shaft 120 extending between the piston pin end 102 and the crankshaft end 104. The shaft 120 may include a generally I-shaped cross-section X_{F} typical of connecting rods. It should be noted that the cross-section X_{F} of the shaft 120 may include any generally quadrangular section, such as, for example, a square or generally rectangular cross section. The piston pin bore 106 of the piston pin end 102 defines a piston pin bore center 118. The crankshaft or large end 104 generally defines a crankshaft pin bore 122 that has a crankshaft pin bore center 124. The ends 102 and 104 of the connecting rod 100 cooperate to generally define a longitudinal axis A-A of the connecting rod 100.

The piston pin bore surface 110 includes one of more lubrication recesses 112 that extend along only a portion of the longitudinal surface L of the piston pin bore surface 110. The lubrication recesses 112 may be depressions or indentations located in the piston pin bore surface 110. More particularly, the lubrication recesses 112 are used to accumulate a lubricant, such as, for example, oil or coolant during operation when the connecting rod 100 is assembled in a piston assembly. Turning now to FIG. 1B, as the connecting rod 100 assembled with a piston. More specifically, the connecting rod 100 is assembled to a piston main body 200 by way of a piston pin 202. In other words, a piston pin 202 is received in the piston pin end 102 of the connecting rod 100, i.e., within piston pin bore 106, thereby generally securing the connecting rod 100 to the piston 200. In one example the piston 200 is assembled within a cylinder of an internal combustion engine. An interface I between the piston pin bore 110 of the connecting rod 100 and the piston pin 202 typically experiences continuous radial loads from the piston pin 202 during operation. The lubrication recesses 112 are provided in an effort to enhance lubrication between the piston pin 202 and the piston pin bore surface 110, as the lubrication typically accumulates within the lubrication recesses 112, thereby increasing the amount of lubrication at the interface I.

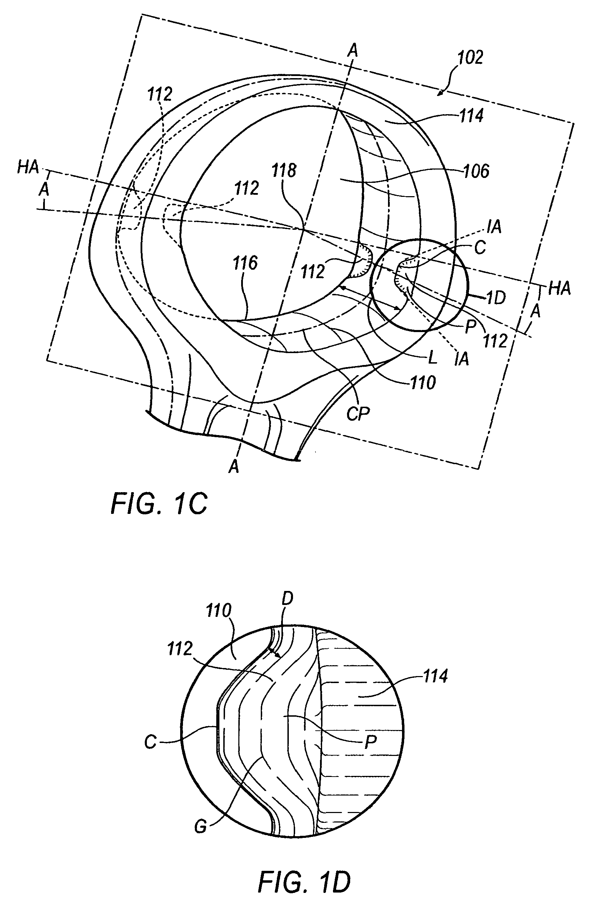

FIG. 1C is an enlarged view of the piston pin end or small end 102. The piston pin bore surface 110 includes several lubrication recesses 112 that extend in this embodiment along only a portion of the longitudinal surface L such that each lubrication recess 112 intersects only one of the front face 114 and the rear face 116 of the piston pin end 102. That is, in this embodiment the lubrication recesses 112 do not generally extend into a central portion CP of the longitudinal surface L, where the central portion CP is illustrated as a plane intersecting the piston pin end 102. The outer surface of the lubrication recesses 112 within the piston pin bore surface 110 are defined by the outer profile P of the lubrication recess 112. That is, the outer profile P defines the depth and shape of the indentations that create the lubrication recesses 112. In one illustrative example the profile P of the lubrication recesses 112 include a depth D (illustrated in FIG. 1D) of about 0.019 inches (0.50 mm) within the piston pin bore surface 110.

In this embodiment, the lubrication recess 112 includes a generally tapered contour C. The contour C represents a boundary between the piston pin bore surface 110 and the outer profile P of the lubrication recess 112, where the contour C generally indicates the position of the lubrication recess 112. The contour C of the lubrication recesses 112 is tapered inwardly, towards the central portion CP of the longitudinal surface L. That is, the contour C is formed at an inward angle IA, oriented towards the central portion CP. It should be noted that while FIGS. 1A and 1C illustrate the contour C of the lubrication recesses 112 having a generally tapered profile, the contour C may include other profiles as well. For example, in one alternative illustration the contour C includes a semi-circular profile.

The contour C is generally finished in a machining operation that removes material and creates a final finish of the piston pin bore surface 110. That is, the boundary between the piston pin bore surface 110 and the lubrication recess 112 is substantially defined in a machining operation. It should be noted that while the machining operation of the piston pin bore surface 110 generally defines the contour C, i.e., the boundary between the piston pin bore surface 110 and the lubrication recess 112, the outer profile P of the lubrication recess 112 remains generally unaffected, as the outer profile P is generally defined by the border between the front face 114 and the lubrication recess 112. In other words, a finishing or machining operation working upon the piston pin bore surface 110 alters the inner contour C while generally leaving the outer profile P unaffected.

FIG. 1C illustrates two lubrication recesses 112 located along the front face 114 generally disposed approximately one hundred and eighty degrees (180°) with respect to each other and two lubrication recesses 112 located along the rear face 116 also generally disposed approximately one hundred and eighty degrees (180°) with respect to each other, where the lubrication recesses 112 located at the front face 114 generally oppose the lubrication recesses 112 on the rear face 116. However, it is understood that other arrangements and any number of lubrication recesses 112 may be provided as well. The lubrication recesses 112 is also positioned at an angle A measured from a horizontal axis HA of the piston pin bore 106, where the horizontal axis HA is oriented generally perpendicular to the axis A-A of the connecting rod 100. The angle A may be any angle up to about ninety degrees (90°) in either direction. It should be noted that the lubrication recesses 112 may also be positioned such that the angle A is about zero degrees (0°), that is, the lubrication recesses 112 may be generally aligned with the horizontal axis HA.

In one example, the piston pin bore surface 110 is generally curved, where the piston pin bore surface 110 includes a substantially convex surface that is curved inwardly towards the piston pin bore center 118 when viewed along the longitudinal surface L. Including a longitudinal surface L that is substantially convex is advantageous, because the piston pin 202 (illustrated in FIG. 1B) experiences some degree of bending during operation of the piston cylinder assembly 20. A generally curved longitudinal surface L accommodates at least a portion of the bending of the piston pin 202. The piston pin bore surface 110 may also include an anti-friction coating applied along at least a portion of the piston pin bore surface 110. The anti-friction coating may be any coating that improves wear or scuffing resistance of the piston pin bore surface 110, such as, but not limited to, a manganese-phosphate coating. Moreover, although the piston pin bore 106 is illustrated as a bushingless pin bore, it should be noted that a bushing may be included within the piston pin bore 106 as well, where the lubrication recesses 112 may be formed along a surface of the bushing that contacts a piston pin, such as the piston pin 202 illustrated in FIG. 1B.

At least the piston pin end 102 of the connecting rod 100 is constructed from a metal based material. Merely as examples, some metals that may be used include steel, aluminum, or titanium. Turning now to FIG. 1D, a magnified illustration of one of the lubrication recesses 112 of the piston pin bore surface 110 illustrates a grain flow G. The grain flow G are lines located at the surface of the lubrication recess 112 that indicate the orientation of the constituents of the metal when a forming process is used to create the lubrication recess 112.

FIG. 1D illustrates the grain flow G at the lubrication recess 112 oriented to generally correspond to the outer profile P. That is because the lubrication recess 112 is created by a metal forming process, such as, but not limited to, forging. Metal forming processes typically orient the grain flow G to follow the direction of metal deformation during the forming process. Including a grain structure G that generally follows the direction of metal deformation results in enhanced material properties, such as, for example, increased strength, ductility, resistance to impact, or fatigue. Creating the lubrication recess 112 by a metal working operation such as forging is advantageous, especially when compared to a material removal operation, such as machining. This is because machining would not typically orient the grain flow G to be substantially aligned with the outer profile P, because material is only removed during a machining operation. That is, FIG. 1D illustrates the grain flow G as lines that are generally parallel to one another, and are substantially aligned to correspond with the outer profile P. Therefore, machining the outer profile P into the piston pin bore surface 110 would not typically result in the increased material properties that are experienced during forming.

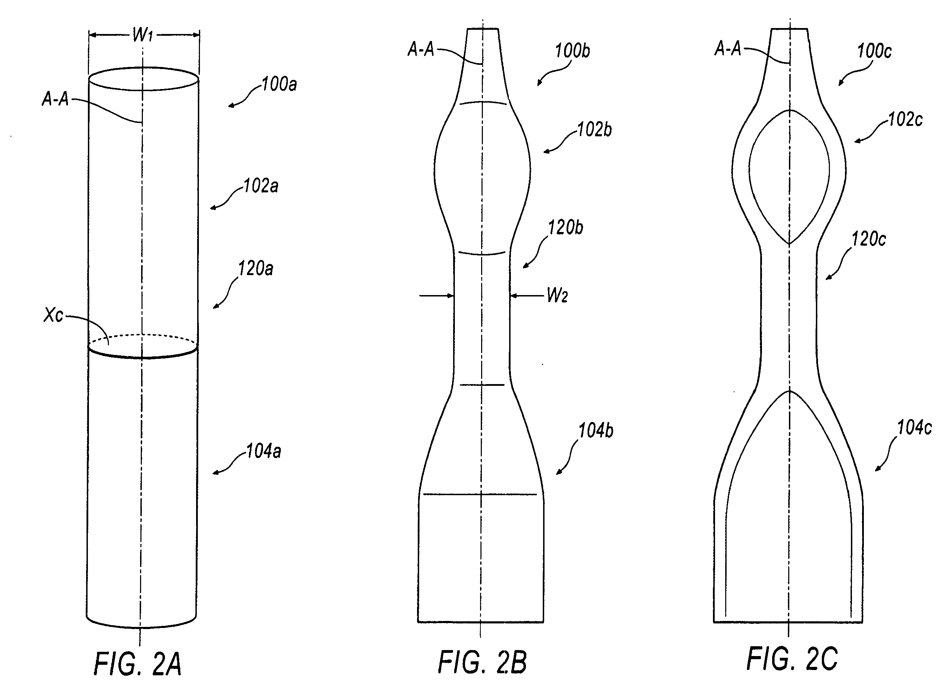

Proceeding to FIGs. 2A-2E, an exemplary process for forming the connecting rod 100 will be described. In FIG. 2A, a connecting rod blank 100a is provided. The connecting rod blank 100a includes a piston pin end blank portion 102a, a crankshaft end blank portion 104a, and a shaft blank portion 120a. The connecting rod blank 100a is generally circular in cross-section, which is illustrated as cross section X_{C}. The connecting rod blank 100a also includes a generally uniform cross sectional width W₁.

Turning now to FIG. 2B, the connecting rod blank 100a is narrowed along the connecting rod blank 100a to form a shaft blank portion 120b of a connecting rod 100b. At least a portion of the shaft blank portion 120b includes a narrower cross section, where the cross sectional width W₁, illustrated in FIG. 2A, is generally reduced to a width W₂ in FIG. 2B. In one example, the shaft blank portion 120b is narrowed by a roll forming operation that generally works directly upon at least a portion of the shaft blank portion 120b.

Referring now to FIG. 2C, a connecting rod blank 100c is shown having a generally quadrangular-sectioned piston pin end 102c and crankshaft end 104c. This transitional shape results from a pre-forging operation that generally forms the connecting rod 100c to a quadrangular-sectioned shape that is generally between the initially round shape shown in FIGS. 2A and 2B, and the final quadrangular-sectioned shape of the connecting rod (e.g., as shown in the perspective view of FIG. 1A). The transitional shape shown in FIG. 2C allows a subsequent forging or other forming operation to more easily form a desired final shape of the connecting rod 100.

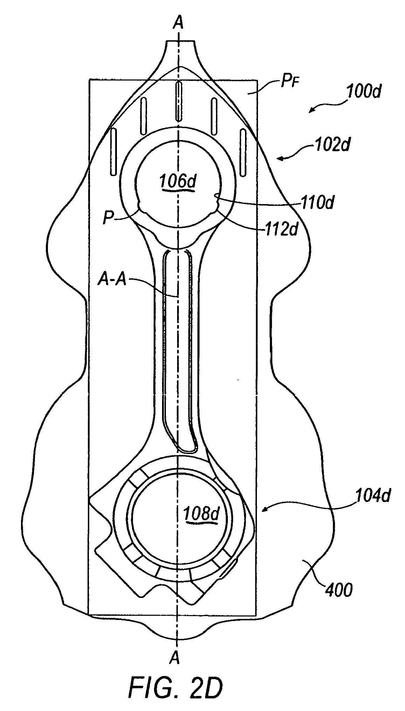

Turning now to FIG. 2D, a connecting rod blank 100d is illustrated after the forming of a piston pin end 102d and the crankshaft end 104d is generally complete, with the exception of initial recesses 106d, 108d. The recesses 106d, 108d have a material flash such that the opening does not extend all the way through the piston pin end 102d or crankshaft end 104d in an axial direction. The material flash is thus subsequently removed to form the bores 106, 108. The blank 100d also includes a material flash 400 generally extending about the perimeter of the connecting rod 100d. As shown in FIG. 2D, the material flash 400 is generally disposed in a plane P_{F} that is generally parallel with the longitudinal axis A-A of the connecting rod 100b. The lubrication recesses 112d also are formed at the piston pin bore recess 106d concurrently with the recess 106d and located along a piston pin bore surface 110d. The formation of the connecting rod 100 is thus generally complete in connecting rod blank 100d, with the exception of the material flash 400 and the material flash within recesses 106d and 108d.

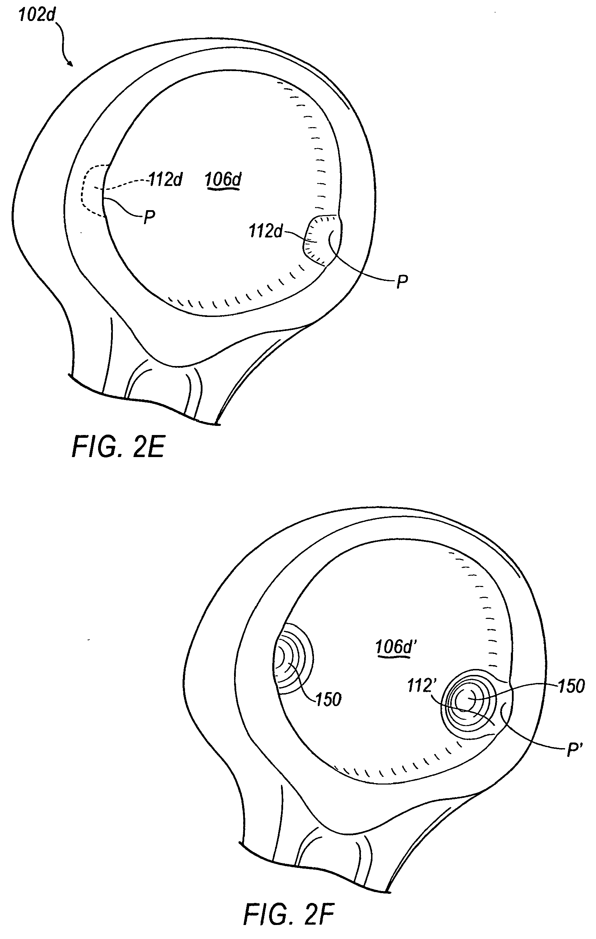

FIG. 2E is an enlarged perspective view of the piston pin recess 106d, before the material flash within the recess 106d is removed. The outer profile P of the lubrication recess 112 has been substantially defined by the forming of the piston pin end 102d. That is, the outer profile P of the lubrication recess 112 includes a final predetermined configuration. The final predetermined configuration may be defined as the general overall outer profile P of the lubrication recess 112 included with the substantially complete connecting rod (illustrated in FIGs. 1A-1D and 2E). That is, the final predetermined configuration of the lubrication recesses 112 is included with the connecting rod 100 assembled to the piston 200, such as the connecting rod and piston assembly illustrated in FIG. 1B. It should be noted that while the outer profile P of the lubrication recesses 112 are substantially complete before the material flash within the recess 106d is removed, the contour C (FIG. 1 C) may be altered or changed in a finishing or machining operation. Specifically, a machining operation removing material and creating the final finish of the piston pin bore surface 110 may still need to occur, thereby defining the contour C of the lubrication recesses 112, while generally not affecting the outer profiles P of the lubrication recesses 112. The predetermined final configuration of the outer profile P is defined concurrently with the forming of the piston pin bore recess 106d.

FIG. 2F is an alternative illustration of a piston pin recess 106d', where generally circular depressions 150 are included within the material flash of the piston pin recess 106d'. In one exemplary illustration, the circular depression 150 is formed concurrently during the same operation that creates the lubrication recesses 112d, and the recess 106d. The overall shape of the depressions 150 defines at least a portion of the outer profile P' of the lubrication recesses 112'. Thus, the depressions 150 facilitate the formation of at least a portion of the outer profile P' of the lubrication recesses 112'. In one example, the depressions 150 may be substantially cone shaped indentations that extend into the piston pin recess 106d'.

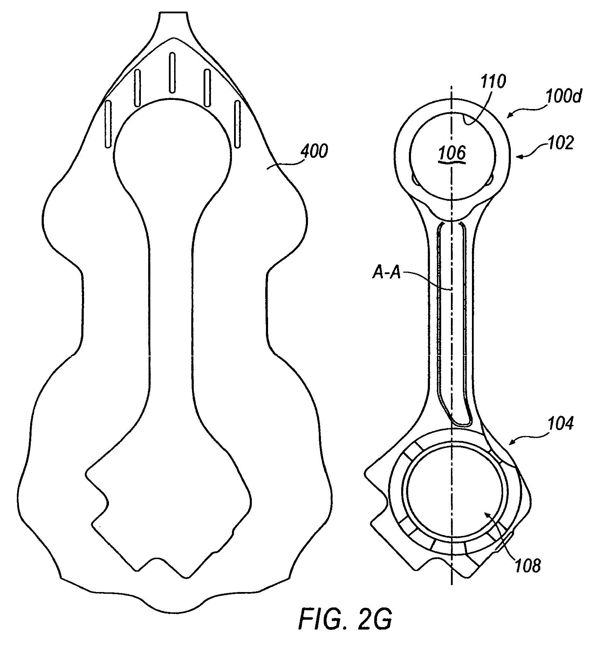

Referring now to FIG. 2G, a generally complete connecting rod 100 is illustrated. The connecting rod 100 now has the material flash 400 and the material flash from recesses 106d and 108d (illustrated in FIG. 2D) removed by a material removal process. The material flash 400 and the material flash from recesses 106d and 108d that is removed may all be generally disposed in the plane P_{F} (illustrated in FIG. 2D). In one example, the removal of the material flash from the recesses 106d and 108d is performed by a machining operation.

The piston pin bore 110 may then undergo a machining operation removing material and creating the final finish of the piston pin bore surface 110. The machining operation may substantially define the contour C of the lubrication recesses 112, while the outer profile P of the lubrication recess 112 remains generally unaffected. Moreover, the piston pin bore surface 110 may also undergo a coating operation, where at least a portion of the piston pin bore surface 110 may be coated with an anti-friction coating. The material removal process may define at least a portion of the contour C as well as the piston pin bore surface 110 (illustrated in FIG. 1C), where the contour C represents the boundary between the piston pin bore surface 110 and the lubrication recess 112.

With specific reference to FIG. 3, a process 300 for forming a connecting rod and/or assembling a piston is described. Process 300 generally begins at step 302 te and generally ends at step 312, where the connecting rod is initially produced or formed. In step 302, a connecting rod blank is provided. For example, the connecting rod blank 100a includes the piston pin end blank portion 102a, the crankshaft end blank portion 104a, the shaft blank portion 120a, and the generally uniform cross section X_{C}. Process 300 then continues to step 304.

In step 304, the cross-sections of the connecting rod blank are generally narrowed at the shaft section. For example, as described above, a roll forming operation is employed to narrow a width W₁ of cross-section X_{C} of the initial connecting rod 100a to a reduced width W₂ of the narrowed connecting rod 100b. Furthermore, the roll forming operation is performed generally at or around at least a portion of the shaft blank portion 120b. The narrowing of the shaft blank portion 120b also work hardens the material, thereby hardening and strengthening the narrowed portions of shaft blank portion 120b. Process 300 then continues to step 306.

In step 306, the crankshaft pin recess 108d is formed in the connecting rod blank. For example, as described above, the crankshaft pin recess 108d is formed in the second connecting rod blank 100a in a series of forging operations as shown in FIGS. 2B - 2D. FIG. 2D illustrates the recesses 106d, 108d having the material flash such that the opening does not extend all the way through the piston pin end 102d or crankshaft end 104d in an axial direction. Process 300 then continues to step 308.

In step 308, the piston pin recess 106d and the at least one lubrication recess 112d are formed concurrently in the piston pin end 102d of the connecting rod blank 100d. For example, as described above, the piston pin recess 106d and the at least one lubrication recess 112d are formed in the second connecting rod blank 100a in a series of forging operations as shown in FIGS. 2B - 2D. FIG. As discussed above, the lubrication recess 112d includes an outer profile P having a final predetermined configuration, where the predetermined final configuration of the outer profile P is substantially defined by forming the lubrication recess 112. The piston pin end 102d and the crankshaft end 104d are generally complete, with the exception of material flash such that the opening does not extend all the way through the piston pin end 102d and the crankshaft end 104d in an axial direction.

The step 308 of forming the piston pin recess 106d and the lubrication recess 112d may be a separate forming operation from the step 306 of forming the piston crankshaft recess 108d. Alternatively, in another example the step 308 of forming the piston pin recess 106d and the lubrication recess 112d may be included in the step 306 of forming of the piston crankshaft bore 108d. Process 300 then continues to step 310.

In step 310, the material flash within the openings of the piston pin recess 106d and the crankshaft recess 108d are removed. For example, the connecting rod blank 100d is generally complete, with the exception of initial recesses 106d, 108d. The recesses 106d, 108d have a material flash such that the opening does not extend all the way through the piston pin end 102d or crankshaft end 104d in an axial direction. The material flash is thus subsequently removed to form the bores 106, 108. For example, the piston pin bore 106 and the crankshaft pin bore 108 are machined to remove the material flash from the openings 106d and 108d, although it is understood that other approaches may be used as well.

The piston pin bore 106 is formed in the connecting rod 100 by any combination of forming operations, such as forging operations. In other words, as described above in regard to FIGS. 2B, 2C and 2D and 2E, the piston pin bore 106 may be generally formed in a series of forging operations such as hot forging. Any other method for forming piston pin bores may be employed.

The steps 304, 306, 308 also generally shape an initially round or circular cross-section of the connecting rod blanks 100a into a generally quadrangular cross-section. In other words, any of the forging, rolling, or other operations described herein work a perimeter of the connecting rod blanks about the shaft 120, thus shaping an initially round cross-section of the blanks (e.g., as best seen in FIG. 2A) to a generally quadrangular cross section defining at least four generally flat sides. For example, the round cross-section initially present at FIG. 2A is shaped into a generally I-shaped cross-section X_{F} typical of connecting rods, as seen in FIG. 1A. Other examples of generally quadrangular cross-sections may include those that are generally square, generally rectangular, or the like.

Proceeding to step 312, a material flash 400 is removed from a perimeter of the connecting rod blank 100 after the narrowing operation. The material flash 400, as seen best in FIG. 2D, is generally disposed in a flash plane P_{F} that includes the longitudinal axis A. In other words, the flash plane P_{F} typically extends along an entire length of the pre-formed connecting rod blank, e.g., connecting rod blank 100d. Process 300 then continues to step 314.

In step 314, the piston pin bore surface 110 undergoes a finishing operation, where material is removed, e.g., by machining, from the piston pin bore surface 110. For example, as described above in regard to FIG. 1C, the contour C that represents the boundary between the piston pin bore surface 110 and the lubrication recess 112 is substantially defined in a finishing operation that removes material from the piston pin bore surface 110. By contrast, the outer profile P of the lubrication recesses 112 is generally not affected by any subsequent machining operations, such that the predetermined final configuration of the outer profile P that was substantially defined by forming of the lubrication recess 112, e.g., in step 308, remains generally the same. In other words, where the finishing operation is applied primarily to the piston pin bore surface 110, the grainflow G and the border between the lubrication recess 112 and the front face 114 of the connecting rod (e.g., as shown in FIGS. 1C and 1D) will remain generally unaffected by the finishing operation. Process 300 then continues to step 350.

In step 350, a connecting rod is assembled with a piston. For example, as described above in regard to FIG. 1B, the connecting rod 100 be is assembled to a piston body 200 with the piston pin 202.

Accordingly, the connecting rod 100 is formed using a process 300 that requires little, if any, additional operations to the lubrication recesses 112 after forming. That is, the lubrication recesses 112 can be formed such that a separate machining operation is not needed to further define or establish the outer profile P of the lubrication recess 112. Omitting a machining operation to the lubrication recesses 112 reduces the complexity in manufacturing of the connecting rod.

## Claims

1. A method of manufacturing a connecting rod, comprising:
providing a connecting rod blank (100), where the connecting rod blank includes a crankshaft end (104) and a piston pin end (102); and
forming a crankshaft pin recess (122) in the crankshaft end of the connecting rod blank, a piston pin recess (106) in the piston pin end, charcterised in that at least one lubrication recess (112) is formed in the piston pin end of the connecting rod blank; and
the lubrication recess (112) and the piston pin recess (106) are both formed concurrently.

2. The method as recited in claim 1, the at least one lubrication recess (112) including an outer profile having a final predetermined configuration, and substantially defining the predetermined final configuration of the outer profile of the at least one lubrication recess by the forming of the piston pin recess step.

3. The method as recited in claim 1, further comprising a generally circular depression (150) within the piston pin recess, the depression (150) defining one of the at least one lubrication recesses (112) and forming at least a portion of the outer profile (P) of the lubrication recess.

4. The method as recited in claim 1, further comprising:
removing a piston pin material flash and a crankpin material flash from the piston pin recess (106) and the crankpin recess (122) thereby creating a piston pin bore and a crankpin bore.

5. The method as recited in claim 4, wherein removing the piston pin flash and the crankshaft pin flash includes machining the piston pin recess (106) and the crankshaft pin recess (122).

6. The method as recited in claim 4, further comprising:
coating of at least a portion of an inner surface (110) of the piston pin bore with an antifriction coating.

7. The method as recited in claim 1, further comprising:
removing a material flash from a perimeter of the connecting rod blank (100).

8. The method as recited in claim 1, further comprising:
narrowing a cross section of the connecting rod blank (100) at a shaft section (120) the shaft section connecting the crankshaft end (104) to the piston pin end (102).

9. The method as recited in claim 1, wherein the piston pin recess (106), the crankshaft pin recess (122) and the at least one lubrication recess (112) are formed by forging.

10. A method of manufacturing a piston assembly, comprising:
making a connecting rod, including:
providing a connecting rod blank (100), where the connecting rod blank (100) includes a crankshaft end (104) and a piston pin end (102), and forming a crankshaft pin recess (122) in the crankshaft end (104) of the connecting rod blank (100), a piston pin recess (106) in the piston pin end (102) of the connecting rod blank (100), and at least one lubrication recess (112) at an inner surface (110) of the piston pin recess, wherein the at least one lubrication recess (112) includes an outer profile (P) having a final predetermined configuration;
assembling the connecting rod (100) to a piston (200), the connecting rod (100) including the predetermined final configuration of the outer profile; and
substantially defining the predetermined final configuration of the outer profiles (P) of the at least one lubrication recess (112) during the forming of the lubrication recess step,
wherein said method further comprises.
forming the at least one lubrication recess (112) and the piston pin recess (106) concurrently.

11. The method as recited in claim 10, further comprising:
the step of including a generally circular depression within the piston pin recess (106), the depression defining at least a portion of the outer profile of the lubrication recess.

12. The method as recited in claim 10, further comprising:
removing a piston pin material flash and a crankpin material flash from the piston pin recess (106) and the crankpin recess (122) to create a piston pin bore and a crankpin bore.

13. The method as recited in claim 12, wherein removing the piston pin flash and the crankshaft pin flash includes machining the piston pin recess (106) and the crankshaft pin recess.

14. The method as recited in claim 12, further comprising:
coating at least a portion of an inner surface (110) of the piston pin bore with an anti-friction coating.

15. The method as recited in claim 10, further comprising:
the step of removing a material flash from a perimeter of the connecting rod

## Patentansprüche

1. Verfahren zum Fertigen einer Pleuelstange, umfassend:
Bereitstellen eines Pleuelstangenrohlings (100), wobei der Pleuelstangenrohling ein Kurbelwellenende (104) und ein Kolbenbolzenende (102) einschließt; und
Bilden einer Kurbelzapfenvertiefung (122) in dem Kurbelwellenende des Pleuelstangenrohlings, einer Kolbenbolzenvertiefung (106) in dem Kolbenbolzenende, **dadurch gekennzeichnet, dass** mindestens eine Schmiervertiefung (112) in dem Kolbenbolzenende des Pleuelstangenrohlings gebildet wird; und
die Schmiervertiefung (112) und die Kolbenbolzenvertiefung (106) gleichzeitig gebildet werden.

2. Verfahren nach Anspruch 1, wobei die mindestens eine Schmiervertiefung (112) ein Außenprofil mit einer endgültigen vorgegebenen Konfiguration einschließt und die vorgegebene endgültige Konfiguration des Außenprofils der mindestens einen Schmiervertiefung im Wesentlichen im Schritt des Bildens der Kolbenbolzenvertiefung definiert wird.

3. Verfahren nach Anspruch 1, ferner umfassend eine allgemein kreisförmige Absenkung (150) innerhalb der Kolbenbolzenvertiefung, wobei die Absenkung (150) eine der mindestens einen Schmiervertiefungen (112) definiert und mindestens einen Abschnitt des Außenprofils der Schmiervertiefung bildet.

4. Verfahren nach Anspruch 1, ferner umfassend:
Entfernen eines Kolbenbolzenmaterialgrats und eines Pleuelzapfenmaterialgrats von der Kolbenbolzenvertiefung (106) und der Pleuelzapfenvertiefung (122), wodurch eine Kolbenbolzenbohrung und eine Pleuelzapfenbohrung erzeugt werden.

5. Verfahren nach Anspruch 4, wobei der Kolbenbolzengrat und der Kurbelzapfengrat maschinelle Bearbeitung der Kolbenbolzenvertiefung (106) und der Kurbelzapfenvertiefung (122) einschließen.

6. Verfahren nach Anspruch 4, ferner umfassend:
Beschichten mindestens eines Abschnitts der Innenoberfläche (110) der Kolbenbolzenbohrung mit einer Antireibungsbeschichtung.

7. Verfahren nach Anspruch 1, ferner umfassend:
Entfernen eines Materialgrats von einem Umfang des Pleuelstangenrohlings (100).

8. Verfahren nach Anspruch 1, ferner umfassend:
Verengen eines Querschnitts des Pleuelstangenrohlings (100) an einem Schaftabschnitt (120), wobei der Schaftabschnitt das Kurbelwellenende (104) mit dem Kolbenbolzenende (102) verbindet.

9. Verfahren nach Anspruch 1, wobei die Kolbenbolzenvertiefung (106), die Kurbelzapfenvertiefung (122) und die mindestens eine Schmiervertiefung (112) durch Schmieden gebildet werden.

10. Verfahren zum Fertigen einer Kolbengruppe, umfassend:
Herstellen einer Pleuelstange, einschließend:
Bereitstellen des Pleuelstangenrohlings (100),
wobei der Pleuelstangenrohling (100) ein Kurbelwellenende (104) und ein Kolbenbolzenende (102) einschließt; und
Bilden einer Kurbelzapfenvertiefung (122) in dem Kurbelwellenende (104) des Pleuelstangenrohlings (100), einer Kolbenbolzenvertiefung (106) in dem Kolbenbolzenende (102) des Pleuelstangenrohlings (100) und mindestens einer Schmiervertiefung (112) an einer Innenoberfläche (110) der Kolbenbolzenvertiefung,
wobei die mindestens eine Schmiervertiefung (112) ein Außenprofil (P) mit einer endgültigen vorgegebenen Konfiguration einschließt;
Montieren der Pleuelstange (100) an einen Kolben (200), wobei die Pleuelstange (100) die vorgegebene endgültige Konfiguration des Außenprofils einschließt; und
im Wesentlichen Definieren der vorgegebenen endgültigen Konfiguration des Außenprofils (P) der mindestens einen Schmiervertiefung (112) während der Bildung des Schmiervertiefungsschritts;
wobei das Verfahren ferner das gleichzeitige Bilden der mindestens einen Schmiervertiefung (112) und der Kolbenbolzenvertiefung (106) einschließt.

11. Verfahren nach Anspruch 10, ferner umfassend:
den Schritt des Einschließens einer allgemein kreisförmigen Absenkung (150) in die Kolbenbolzenvertiefung, wobei die Absenkung mindestens einen Abschnitt des Außenprofils (P) der Schmiervertiefung definiert.

12. Verfahren nach Anspruch 10, ferner umfassend:
Entfernen eines Kolbenbolzenmaterialgrats und eines Pleuelzapfenmaterialgrats von der Kolbenbolzenvertiefung (106) und der Pleuelzapfenvertiefung (122), um eine Kolbenbolzenbohrung und eine Pleuelzapfenbohrung zu erzeugen.

13. Verfahren nach Anspruch 12, wobei das Entfernen des Kolbenbolzengrats und des Kurbelzapfengrats maschinelle Bearbeitung der Kolbenbolzenvertiefung (106) und der Kurbelzapfenvertiefung einschließen.

14. Verfahren nach Anspruch 12, ferner umfassend:
Beschichten mindestens eines Abschnitts der Innenoberfläche (110) der Kolbenbolzenbohrung mit einer Antireibungsbeschichtung.

15. Verfahren nach Anspruch 10, ferner umfassend:
den Schritt des Entfernens eines Materialgrats von einem Umfang des Pleuelstangenrohlings.

## Revendications

1. Procédé de fabrication d'une bielle, comprenant :
une étape de fourniture d'une ébauche de bielle (100),
où l'ébauche de bielle comprend
une extrémité de vilebrequin (104) et une extrémité de tige de piston (102) ; et
une étape de formation d'une cavité (122) de tige de vilebrequin dans l'extrémité de vilebrequin de l'ébauche de bielle, une cavité (106) de tige de piston dans l'extrémité de tige de piston,
**caractérisé par le fait qu'**au moins une cavité (112) de graissage est formée dans l'extrémité de tige de piston de l'ébauche de bielle ; et
la cavité (112) de graissage et la cavité (106) de tige de piston sont toutes deux formées simultanément.

2. Procédé selon la revendication 1, ladite au moins une cavité (112) de graissage comportant un profil extérieur comprenant une configuration finale prédéterminée, et définissant sensiblement la configuration finale prédéterminée du profil extérieur de ladite au moins une cavité de graissage par l'étape de formation de la cavité de tige de piston.

3. Procédé selon la revendication 1, comprenant en outre une dépression (150) de forme générale circulaire à l'intérieur de la cavité de tige de piston, la dépression (150) définissant une de ladite au moins une cavité (112) de graissage et formant au moins une partie du profil extérieur de la cavité de graissage.

4. Procédé selon la revendication 1, comprenant en outre :
une étape d'enlèvement d'un matériau de bavure de tige de piston et d'un matériau de bavure de tige de vilebrequin de la cavité (106) de tige de piston et de la cavité (122) de tige de vilebrequin, créant ainsi un alésage de tige de piston et un alésage de tige de vilebrequin.

5. Procédé selon la revendication 4, dans lequel l'enlèvement du matériau de bavure de tige de piston et du matériau de bavure de tige de vilebrequin comprend l'usinage de la cavité (106) de tige de piston et de la cavité (122) de tige de vilebrequin.

6. Procédé selon la revendication 4, comprenant en outre :
une étape de revêtement d'au moins une partie d'une surface intérieure (110) de l'alésage de tige de piston avec un revêtement antifriction.

7. Procédé selon la revendication 1, comprenant en outre :
une étape d'enlèvement d'un matériau de bavure d'un périmètre de l'ébauche de bielle (100).

8. Procédé selon la revendication 1, comprenant en outre :
une étape de rétrécissement d'une section transversale de l'ébauche de bielle (100) à une section de tige (120) la section de tige connectant l'extrémité du vilebrequin (104) à l'extrémité de la tige de piston (102).

9. Procédé selon la revendication 1, dans lequel la cavité (106) de tige de piston, la cavité (122) de tige de vilebrequin et la au moins une cavité (112) de graissage sont formées par forgeage.

10. Procédé de fabrication d'un assemblage de piston, comprenant :
une étape de fabrication d'une bielle, comprenant :
une étape de fourniture d'une ébauche de bielle (100), où l'ébauche de bielle (100) comprend une extrémité de vilebrequin (104) et une extrémité de tige de piston (102), et
une étape de formation d'une cavité (122) de tige de vilebrequin dans l'extrémité du vilebrequin (104) de l'ébauche de bielle (100), une cavité (106) de tige de piston dans l'extrémité de tige de piston (102) de l'ébauche de bielle (100), et au moins une cavité de graissage (112) à une surface intérieure (110) de la cavité de tige de piston, dans lequel ladite au moins une cavité (112) de graissage comprend un profil extérieur (P) comprenant une configuration finale prédéterminée ;
une étape d'assemblage de la bielle (100) à un piston (200), la bielle (100) comprenant la configuration finale prédéterminée du profil extérieur; et
une étape de définition sensible de la configuration finale prédéterminée du profil extérieur (P) de ladite au moins une cavité (112) de graissage au cours de l'étape de formation de la cavité de graissage,
dans lequel le procédé comprend en outre.
une étape de formation de ladite au moins une cavité de graissage (112) et de la cavité (106) de tige de piston simultanément.

11. Procédé selon la revendication 10, comprenant en outre :
l'étape d'inclusion d'une dépression (150) de forme générale circulaire à l'intérieur de la cavité de tige de piston, la dépression définissant au moins une partie du profil extérieur (P) de la cavité de graissage.

12. Procédé selon la revendication 10, comprenant en outre :
une étape d'élimination d'un matériau de bavure de tige de piston et un matériau de bavure de tige de vilebrequin de la cavité (106) de tige de piston et de la cavité (122) de tige de vilebrequin pour créer un alésage de tige de piston et un alésage de tige vilebrequin.

13. Procédé selon la revendication 12, dans lequel l'enlèvement du matériau de bavure de tige de piston et du matériau de bavure de tige de vilebrequin comprend l'usinage de la cavité (106) de tige de piston et de la cavité de tige de vilebrequin.

14. Procédé selon la revendication 12, comprenant en outre :
une étape de revêtement d'au moins une partie d'une surface interne (110) de l'alésage de tige de piston avec un revêtement antifriction.

15. Procédé selon la revendication 10, comprenant en outre :
l'étape d'enlèvement d'un matériau de bavure d'un périmètre de l'ébauche de bielle.
